# EUROPEAN PATENT APPLICATION

(11) **EP 1 092 571 A2**
(43) Date of publication of application: **18.04.2001**
(21) Application number: 00308798.8
(22) Date of filing: 05.10.2000
(51) Int. Cl.: B60F 1/04

(54) **Rail-road freight vehicles**

(30) Priority: 15.10.1999 GB 9924345
(71) Applicant: Wickham Rail Developments Limited, Waltham Cross, Hertfordshire EN7 6SY (GB)
(72) Inventor: Eldridge, Douglas Stuart, Brightlingsea C07 0JH (GB)
(74) Representative: W.P. THOMPSON & CO.

(57) **Abstract**

A rail-road freight vehicle which has a chassis (30) with fixed-position rail wheels, a tractor unit incorporating a road bogie unit at the front end, and a trailing road bogie unit (28), has locating/locking couplings between the chassis and each road bogie unit to improve directional and/or load stability. Female members (34) at each side of the chassis are arranged to receive locating/locking pins (36) at each side of each bogie unit.

## Description

This invention relates generally to rail-road freight vehicles and also to transportation systems designed to operate with such vehicles.

Rail wagons for use in intermodal transport systems are known. One example is described in UK patent specification GB2147551B. This describes a rail wagon suitable for use in an intermodal transport system, designed so that the freight vehicle can make local collections and deliveries by road and long distance haulage by rail.

Until recently there has been no concerted effort to move freight by rail, with road transportation of freight being predominant. However, primarily due to environmental issues, efforts are now being made to persuade freight companies to use rail transport into city centres and only to use road transportation to the final destination. There is therefore great interest in intermodal transport vehicles which can be switched from road to rail and vice versa at transfer sites or freight hubs close to city centres.

It is an object of the present invention to provide a rail-road freight vehicle which is an improvement on those proposed heretofore. In particular, the vehicles of the present invention meet EC environmental requirements.

It is a further object of the present invention to provide a rail-road freight vehicle which is suitable for operation by one man, for example the driver of the vehicle.

It is a further object of the invention to provide means to improve the directional and/or load stability of a vehicle, for example a rail-road freight vehicle.

In accordance with the present invention there is provided a rail-road vehicle comprising a chassis, fixed-position rail wheels carried by the chassis, jacking means at the front end and rear end of the vehicle, and coupling means arranged to couple the chassis to road bogie units at the front and rear ends of the vehicle, the coupling means comprising at each end of the vehicle a pair of female members spaced one at each side of the vehicle and arranged to receive and hold respective male members on the road bogie units.

Preferably, the female members are housings shaped to receive a pin and to lock the pin to the housing on entry.

The invention also extends to such a vehicle in combination with a road bogie unit comprising at least one pair of road wheels and a pair of fixed-position spaced locating pins, one at each side of the bogie unit, the locating pins being held locked in the respective female members of the coupling means.

The invention further extends to such a vehicle in combination with a tractor unit at the front end, and a trailing road bogie unit at the rear end, the tractor unit comprising a road bogie unit, wherein each bogie unit comprises at least one pair of road wheels and a pair of fixed-position spaced locating pins, one at each side of each bogie unit, the locating pins being held locked in the respective female members of the coupling means.

Preferably, a control unit is provided on the chassis-mounted portion of the vehicle, the control unit comprising means for independently operating the jacking means at the front and rear ends of the vehicle.

Also in accordance with the invention there is provided a method of coupling a road bogie unit to such a rail-road vehicle, which comprises jacking up one end of the vehicle, pushing the road bogie unit into a position below the raised vehicle end from one side of the vehicle, and bringing male locating/locking members on the road bogie unit into engagement with the respective female members on the vehicle.

Also in accordance with the invention there is provided a method of coupling a road bogie unit to such a road vehicle, which comprises jacking up one end of the vehicle, pushing the road bogie unit into a position below the raised vehicle end from one side of the vehicle onto a turntable, rotating the turntable and the road bogie unit until the bogie unit is aligned with the chassis, and bringing male locating/locking members on the road bogie unit into engagement with the respective female members on the vehicle.

In order that the invention may be more fully understood, embodiments of the invention will now be described in more detail by way of example and with reference to the accompanying drawings.

In the drawings:
Fig. 1 is a view of a rail-road freight vehicle in accordance with the invention;
Fig. 2 shows the mode of operation of the vehicle in switching from rail to road and vice versa; and,
Fig. 3 is an illustration of multi-purpose twin pin units fitted to the vehicle to assist in coupling and location for road mode travel.

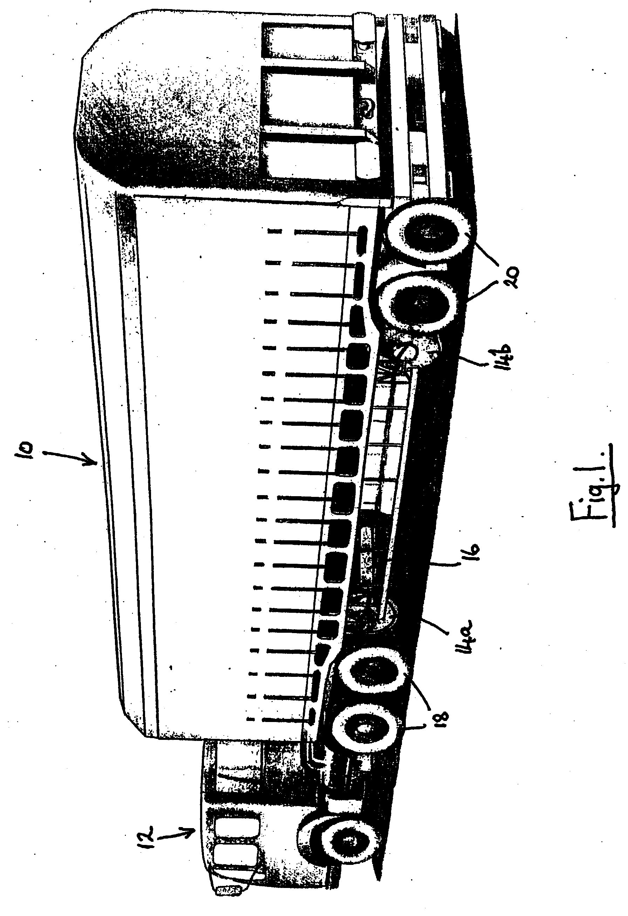

Fig. 1 shows a rail-road freight vehicle 10 (hereinafter referred to as an RRFV) coupled to a tractor unit 12 and thus adapted for road travel. The vehicle comprises a chassis which carries two pairs of fixed-position rail wheels 14a, 14b on respective axles 16. Other numbers and combinations of rail wheels may be used, including bogies. With the rail wheels 14a, 14b fixed in position the vehicle is dedicated to a single gauge of railway track. The vehicle can be fitted with disc or clasp brakes, and has jacks at front and rear to raise and lower the respective ends of the chassis. As shown in Fig. 1, the front and rear bogie units fitted with front wheels 18 and rear wheels 20 are coupled to the chassis in the road transportation mode.

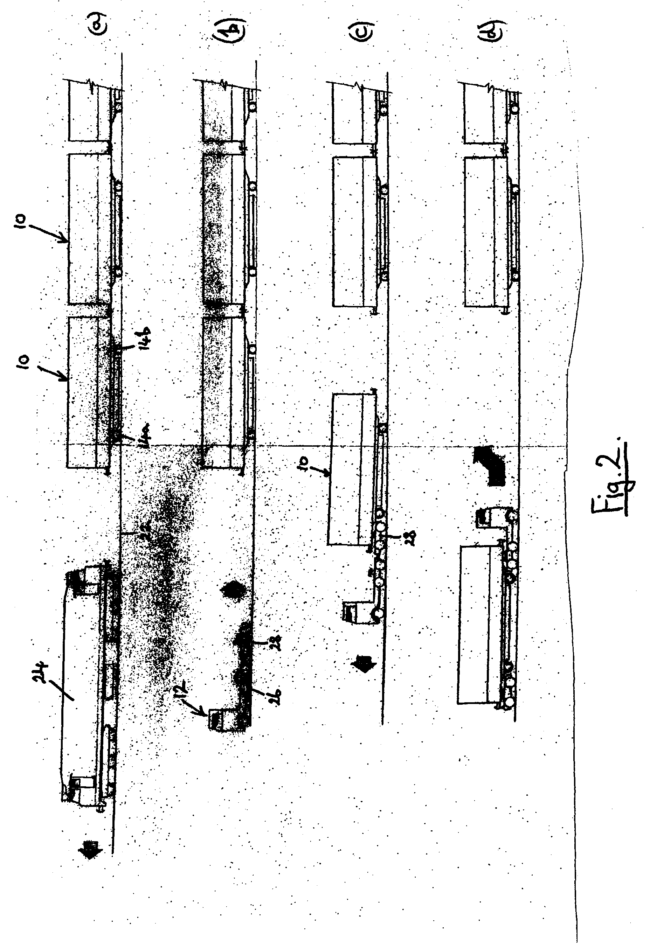

Fig. 2 illustrates the mode of switching from rail to road transportation of the vehicle. In Fig. 2(a) is shown a coupled series of RRFVs 10 delivered for example to a rail siding on rails 22 by a locomotive 24. In order to convert from rail mode to road mode, as shown in Fig. 2(b), a tractor unit having a coupling plate 26 and a bogie unit 28 coupled thereto is reversed towards the end RRFV. The road bogie 28 is lined up with the end of the RRFV. The driver of the vehicle then operates the jacks at the front end of the RRFV, raising that end of the trailer. The road bogie 28 is then pushed under the end of the trailer. The driver then disconnects the first RRFV from the next unit and drives his vehicle forwards to separate the first RRFV from the remainder, as required. This is shown in Fig. 2(c). The driver then disconnects the tractor unit from the front road bogie 28 and drives to the other end of the RRFV 10. He aligns the tractor unit with the RRFV, raises the rear end of the RRFV by operation of the rear vehicle jacks, and then reverses the tractor unit under the rear end of the RRFV. The appropriate air supply connections are then made, the rear jacks are raised, and the tractor unit and RRFV, as shown in Fig. 2(d), are then ready for road travel.

The control system for performing this operation is extremely simple. A power pack and a control unit may be provided on the tractor unit or, preferably, on the RRFV. This includes a switch for controlling the power pack and two levers for operating the front and rear jacks of the vehicle independently. This means that the conversion process can readily be carried out by just one person, for example the driver of the vehicle. For conversion from road to rail, the reverse operation is carried out. There is preferably also provision for manual operation of the jacks.

In the embodiment described above, the road bogies 28 are fitted to the RRFV from opposite ends. Other alternatives are possible. For example, the road bogies 28 could be fitted to the RRFV from the side. This could be done by lifting the road bogie 28 with a forklift vehicle, pushing the bogie into place from the side with the end of the RRFV jacked up and then locking it in place by any suitable mechanism. Such a system would not involve any manoeuvring of the tractor unit, although it would normally require the use of a forklift vehicle operator as well as the driver of the vehicle.

In yet another alternative embodiment, a turntable is located between the rails 22 and after for example the front end of the RRFV 10 has been positioned over the turntable and jacked up the road bogie 28 can be driven in from the side using the tractor unit 12 until the bogie is positioned over the turntable. The tractor unit is then uncoupled and the road bogie can be turned through 90° and then locked into place to the front end of the RRFV. A similar procedure would be carried out at the other end of the trailer.

Air bag suspension on tractor unit and/or bogie unit may be used to assist or replace the jacks.

It is also a feature of the RRFV of the present invention that the rail wheels 14a, 14b are positioned close to the road wheels 20 in order to prevent the vehicle grounding on the roadway.

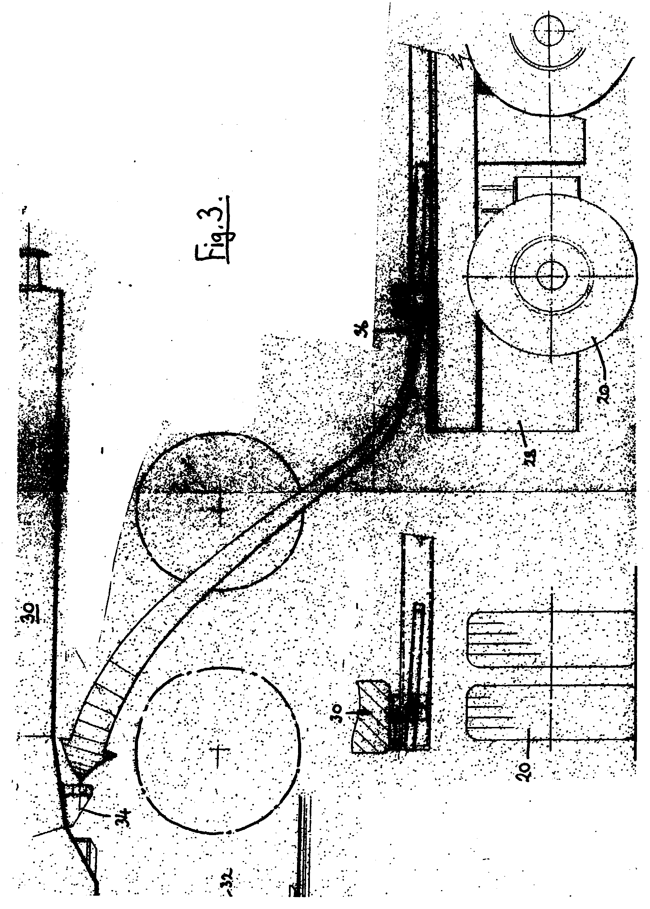

One of the problems in coupling the road bogie units, particularly the trailing road bogie unit, to the RRFV is in locating the two parts and then locking them together. Fig. 3 shows a mechanism for locating and locking a road bogie and the RRFV. In Fig. 3 there is shown the chassis of the RRFV at 30 and the trailing road bogie is shown at 28. Fig. 3 also shows one of the jacks 32 on the RRFV. The underside of the chassis 30 is provided with four housings 34, i.e. female members, only one of which is shown in the drawing, two at the front of the chassis and two at the rear of the chassis. These are positioned at or adjacent to each side of the chassis. They are welded to the underside of the chassis and are designed to receive locating/locking pins 36, i.e. male members, which are sited spaced apart at each side of the road bogie 28. The two locating/locking pins 36 on the road bogie enter into the housings 34 as the road bogie is reversed under the chassis and automatically lock into place in the housings. The view shown in the bottom left-hand corner of Fig. 3 is a sectional view at the locating/locking pin.

The twin pin units fitted to the road bogies act as coupling locators for road mode travel, facilitating the lining up and locating of both the trailing road bogie and the tractor unit. They also provide directional stability for the trailing road bogie by locking the unit fore and aft to the centre line, and thus preventing the trailing end of the vehicle from wandering off course. The locking pins 36 also provide load stability, transversely stabilising the trailer at the outer extremities and thus avoiding excessive transverse movement, which would be the case if a load was left only on the trailing road bogie fifth wheel plate. In such a situation an adverse camber on the road would be a potential problem.

The locating/locking pin and housing mechanism shown in Fig. 3 as applied to an RRFV could also be utilised for other transportation and freight vehicles for road and rail. It should therefore not be understood to be only applicable to the particular embodiment illustrated above and not applicable only to an intermodal vehicle. The coupling mechanism is applicable to any situation where one wishes to achieve directional and/or load stability.

## Claims

1. A rail-road vehicle comprising a chassis, fixed-position rail wheels (14a, 14b) carried by the chassis, jacking means (32) at the front end and rear end of the vehicle, and coupling means arranged to couple the chassis to road bogie units (26, 28) at the front and rear ends of the vehicle, characterised in that the coupling means comprises at each end of the vehicle a pair of female members (34) spaced one at each side of the vehicle and arranged to receive and hold respective male members (36) on the road bogie units (26, 28).

2. A rail-road vehicle as claimed in claim 1, characterised in that the female members (34) are housings shaped to receive a pin (36) and to lock the pin to the housing on entry.

3. A rail-road vehicle as claimed in claim 1 or 2, characterised in that the female members (34) are welded to the underside of the chassis.

4. A rail-road vehicle as claimed in claim 1, 2 or 3, in combination with a road bogie unit (26, 28) comprising at least one pair of road wheels (20) and a pair of fixed-position spaced locating pins (36), one at each side of the bogie unit, the locating pins being held locked in the respective female members (34) of the coupling means.

5. A rail-road vehicle as claimed in claim 1, 2 or 3, in combination with a tractor unit (26) at the front end, and a trailing road bogie unit (28) at the rear end, the tractor unit comprising a road bogie unit, wherein each bogie unit comprises at least one pair of road wheels (20) and a pair of fixed-position spaced locating pins (36), one at each side of each bogie unit, the locating pins being held locked in the respective female members (34) of the coupling means.

6. A rail-road vehicle as claimed in any preceding claim, characterised in that a control unit is provided on the chassis-mounted portion of the vehicle, the control unit comprising means for independently operating the jacking means at the front and rear ends of the vehicle.

7. A method of coupling a road bogie unit to a rail-road vehicle as claimed in any of claims 1 to 3, which comprises jacking up one end of the vehicle, pushing the road bogie unit (26, 28) into a position below the raised vehicle end from one side of the vehicle, and bringing male locating/locking members (36) on the road bogie unit into engagement with the respective female members (34) on the vehicle.

8. A method of coupling a road bogie unit to a rail-road vehicle as claimed in any of claims 1 to 3, which comprises jacking up one end of the vehicle, pushing the road bogie unit (26, 28) into a position below the raised vehicle end from one side of the vehicle onto a turntable, rotating the turntable and the road bogie unit until the bogie unit is aligned with the chassis, and bringing male locating/locking members(36) on the road bogie unit into engagement with the respective female members (34) on the vehicle.
